# EUROPEAN PATENT APPLICATION

(11) **EP 4 129 810 A1**
(43) Date of publication of application: **08.02.2023**
(21) Application number: 22156309.1
(22) Date of filing: 11.02.2022
(51) Int. Cl.: B62K 19/16, B62K 19/18, B29C 65/50, B29C 65/00

(54) **BICYCLE FRAME COMPONENT AND METHOD FOR THERMOFORMING THE SAME**

(30) Priority: 02.08.2021 TW 110128407
(71) Applicant: A-Pro Tech Co., Ltd., Taichung City 43769 (TW)
(72) Inventor: LIN, Boris, 43769 Taichung City (TW)
(74) Representative: Piotrowicz, Pawel Jan Andrzej

(57) **Abstract**

A bicycle frame component (101, 102, 103, 104) includes a first casing (1, 1'), a second casing (2, 2') and a reinforcing unit (3, 3'). The first casing (1, 1') has a first inner surface (111), a first outer surface (112, 112'), and a first abutment surface (113) interconnecting the first inner surface (111) and the first outer surface (112, 112'). The second casing (2, 2') has a second inner surface (211), a second outer surface (212, 212'), and a second abutment surface (213) interconnecting the second inner surface (211) and the second outer surface (212, 212'). The first and second abutment surface (113, 213) abut against each other. The reinforcing unit (3, 3') is disposed on and thermally bonded to a junction of the first casing (1, 1') and the second casing (2, 2'). A method for thermoforming the bicycle frame component (101, 102, 103, 104) is also disclosed.

## Description

The disclosure relates to a bicycle frame component and a method for thermoforming the same.

A conventional bicycle frame component is formed by subjecting two thermoplastic casings to a thermoforming process. Each of the casings includes a casing body and a connection part extending outwardly from the casing body. To form the conventional bicycle frame component, the connection parts of the casings are first overlapped in a staggered manner, followed by performing a thermoforming process using a thermoforming mold to thermally bond the two connection parts together.

Although the conventional method can make use of the thermoforming mold to thermally bond the two casings together so as to form the bicycle frame component, the overlapped and staggered connection parts are likely to cause an uneven pressure and might cause cracks during the thermoforming process, resulting in reduced bonding strength of the two casings.

Therefore, an object of the disclosure is to provide a method for thermoforming a bicycle frame component and a bicycle frame component that can alleviate at least one of the drawbacks of the prior art.

According to one aspect of this disclosure, a bicycle frame component includes a first casing, a second casing and a reinforcing unit. The first casing has a first inner surface, a first outer surface opposite to the first inner surface, and a first abutment surface interconnecting the first inner surface and the first outer surface. The second casing has a second inner surface, a second outer surface opposite to the second inner surface, and a second abutment surface interconnecting the second inner surface and the second outer surface. The second abutment surface and the first abutment surface abut against each other. The reinforcing unit is disposed on and thermally bonded to a junction of the first casing and the second casing.

According to another aspect of this disclosure, a method for thermoforming the bicycle frame component includes the following steps:
A) preparing the first casing and the second casing both made of a thermoplastic material;
B) preparing the reinforcing unit which includes at least one of a thermosetting reinforcing member and a thermoplastic reinforcing member;
C) abutting the first and second abutment surfaces against each other, and then placing the reinforcing unit at a junction of the first and second casings; and
D) thermally bonding the reinforcing unit to the first and second casings such that the first and second casings are joined to form the bicycle frame component.

Other features and advantages of the disclosure will become apparent in the following detailed description of the embodiments with reference to the accompanying drawings, of which:
FIG. 1 is an enlarged fragmentary sectional view illustrating a first casing, a second casing and a thermosetting reinforcing member of a first embodiment of a bicycle frame component according to the present disclosure;
FIG. 2 is an enlarged fragmentary sectional view illustrating the first casing, the second casing and a thermoplastic reinforcing member of a second embodiment of the bicycle frame component according to the present disclosure;
FIG. 3 is an enlarged fragmentary sectional view illustrating the first casing, the second casing, the thermosetting reinforcing member and the thermoplastic reinforcing member of a third embodiment of the bicycle frame component according to the present disclosure;
FIG. 4 is an enlarged fragmentary sectional view illustrating the first casing, the second casing, the thermosetting reinforcing member and the thermoplastic reinforcing member of a fourth embodiment of the bicycle frame component according to the present disclosure;
FIG. 5 is an assembled perspective view of a bicycle frame structure incorporating the bicycle frame component of the fourth embodiment; and
FIG. 6 is an exploded perspective view of the bicycle frame structure.

Before the disclosure is described in greater detail, it should be noted that where considered appropriate, reference numerals or terminal portions of reference numerals have been repeated among the figures to indicate corresponding or analogous elements, which may optionally have similar characteristics.

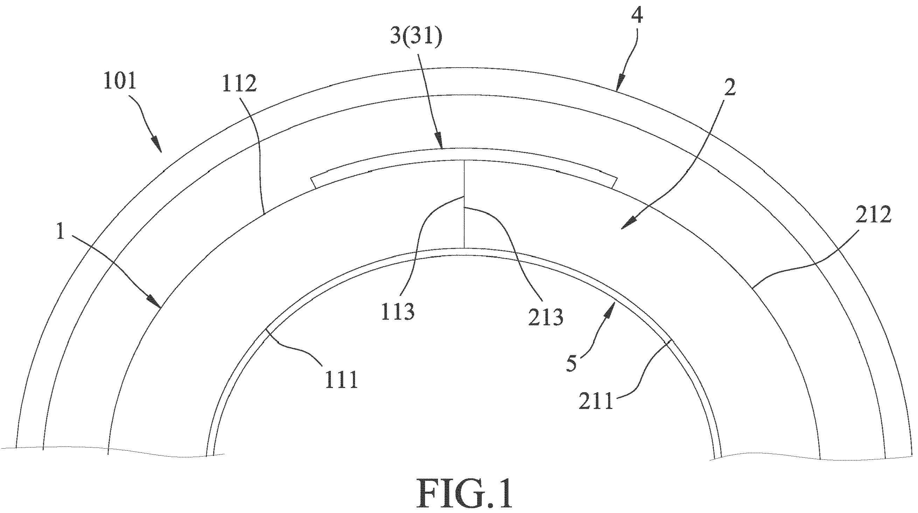

Referring to FIG. 1, a method for thermoforming a bicycle frame component 101 according to a first embodiment of the present disclosure includes steps 1 to 4.

In step 1, a first casing 1 and a second casing 2 both made of a thermoplastic material are prepared. The first casing 1 has a first inner surface 111, a first outer surface 112 opposite to the first inner surface 111, and a first abutment surface 113 interconnecting the first inner surface 111 and the first outer surface 112. The second casing 2 has a second inner surface 211, a second outer surface 212 opposite to the second inner surface 211, and a second abutment surface 213 interconnecting the second inner surface 211 and the second outer surface 212.

In step 2, a reinforcing unit 3 is prepared. The reinforcing unit 3 includes a thermosetting reinforcing member 31.

In step 3, the first abutment surface 113 and the second abutment surface 213 are brought to abut against each other, after which the thermosetting reinforcing member 31 is placed at a junction of the first casing 1 and the second casing 2 to cover a junction of the first outer surface 112 and the second outer surface 212.

In step 4, a thermoforming mold 4 is placed on one side of the junction of the first and second casings 1, 2 having the thermosetting reinforcing member 31 (that is, the junction of the first outer surface 112 and the second outer surface 212), and an air bag 5 is placed on the other side of the junction of the first and second casings 1, 2 opposite to the thermoforming mold 4. Then, the air bag 5 is inflated such that the air bag 5 expands and abuts against the first inner surface 111 and the second inner surface 211. The thermoforming mold 4 abuts against the thermosetting reinforcing member 31, the first outer surface 112 and the second outer surface 212, and cooperates with the air bag 5 to thermally bond the thermosetting reinforcing member 31 to the junction of the first outer surface 112 and the second outer surface 212, thereby joining the first and second casings 1, 2 to form the bicycle frame component 101.

In this embodiment, the thermosetting reinforcing member 31 is a thermosetting plastic which includes a fiber selected from the group consisting of cotton, hemp fiber, carbon fiber, silicon carbide fiber, glass fiber and combinations thereof. In other embodiments, the thermosetting reinforcing member 31 may also include other materials such as a metal stripe, a metal net or a metal sheet, but are not limited thereto. The thermosetting reinforcing member 31 can smoothly cover the junction of the first outer surface 112 and the second outer surface 212, so that, after thermoforming, bonding between the thermosetting reinforcing member 31 and both the first and second casings 1, 2 can be enhanced.

The advantage of this embodiment resides in that, when the first and second casings 1, 2 are subjected to heating and are melted in step 4, the thermosetting reinforcing member 31 is closely bonded to the junction of the first outer surface 112 and the second outer surface 212, reducing the residual stress at the junction of the first casing 1 and the second casing 2 after cooling, so that cracks at the junction can be avoided. Thus, bonding strength at the junction of the first and second casings 1, 2 can be improved.

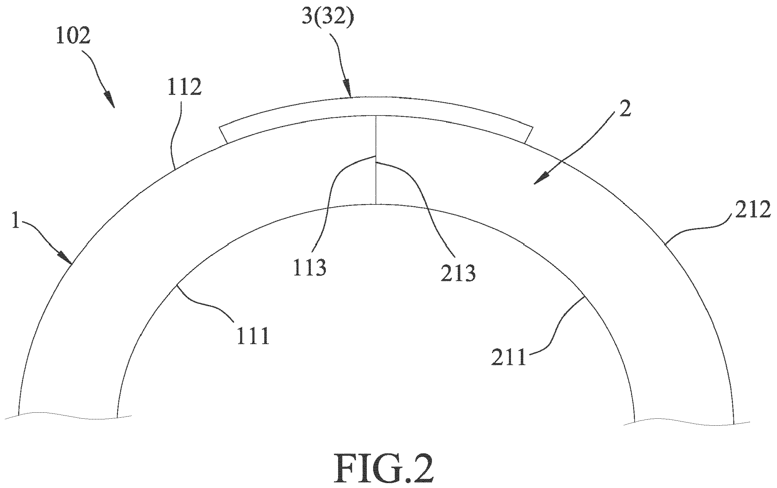

Referring to FIG. 2, a method for thermoforming a bicycle frame component 102 according to a second embodiment of this disclosure is generally similar to that of the first embodiment, except that, in this embodiment, the reinforcing unit 3 includes a thermoplastic reinforcing member 32 instead of the thermosetting reinforcing member 31. In the following paragraphs, only steps 3 and 4 of the second embodiment will be described.

In step 3, the first abutment surface 113 and the second abutment surface 213 are brought to abut against each other, after which the thermoplastic reinforcing member 32 is placed at the junction of the first casing 1 and the second casing 2 to cover the junction of the first outer surface 112 and the second outer surface 212.

In step 4, the thermoplastic reinforcing member 32 is thermally bonded to the junction of the first outer surface 112 and the second outer surface 212, so that the first and second casings 1, 2 are joined to form the bicycle frame component 102.

In this embodiment, the thermoplastic reinforcing member 32 is a continuous fiber reinforced thermoplastic (CFRTP). The CFRTP includes a fiber selected from the group consisting of carbon fiber, glass fiber and a combination thereof, and a thermoplastic selected from the group consisting of polycarbonate (PC), polyethylene (PE), polyethylene terephthalate (PET), polyetheretherketone (PEEK) and combinations thereof.

The advantage of this embodiment resides in that, since the thermoplastic reinforcing member 32 is made of a material having high strength and rigidity, by thermally bonding the thermoplastic reinforcing member 32 to the first casing 1 and the second casing 2, bonding strength at the junction of the first and second casings 1, 2 can be improved.

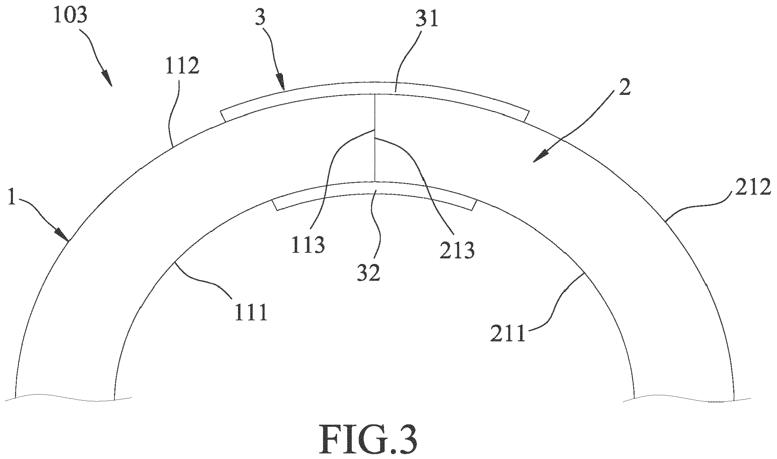

Referring to FIG. 3, a method for thermoforming a bicycle frame component 103 according to a third embodiment of this disclosure is generally similar to that of the first and second embodiments, except that, in this embodiment, the reinforcing unit 3 includes both the thermoplastic reinforcing member 32 and the thermosetting reinforcing member 31. In the following paragraphs, only steps 3 and 4 of the third embodiment will be described.

In step 3, the first abutment surface 113 and the second abutment surface 213 are brought to abut against each other, after which the thermoplastic reinforcing member 32 is placed at the junction of the first inner surface 111 and the second inner surface 211 to cover the same, and the thermosetting reinforcing member 31 is placed at the junction of the first outer surface 112 and the second outer surface 212 to cover the same.

In step 4, the thermoplastic reinforcing member 32 and the thermosetting reinforcing member 31 are thermally bonded to the junction of the first casing 1 and the second casing 2, thereby forming the bicycle frame component 103.

The third embodiment incorporates the advantages of both the first embodiment and the second embodiment, i.e., residual stress at the junction of the first outer surface 112 and the second outer surface 212 can be reduced by the thermosetting reinforcing member 31, while strength and rigidity at the junction of the first inner surface 111 and the second inner surface 211 can be enhanced by the thermoplastic reinforcing member 32, so that bonding strength at the junction of the first casing 1 and the second casing 2 can be further improved.

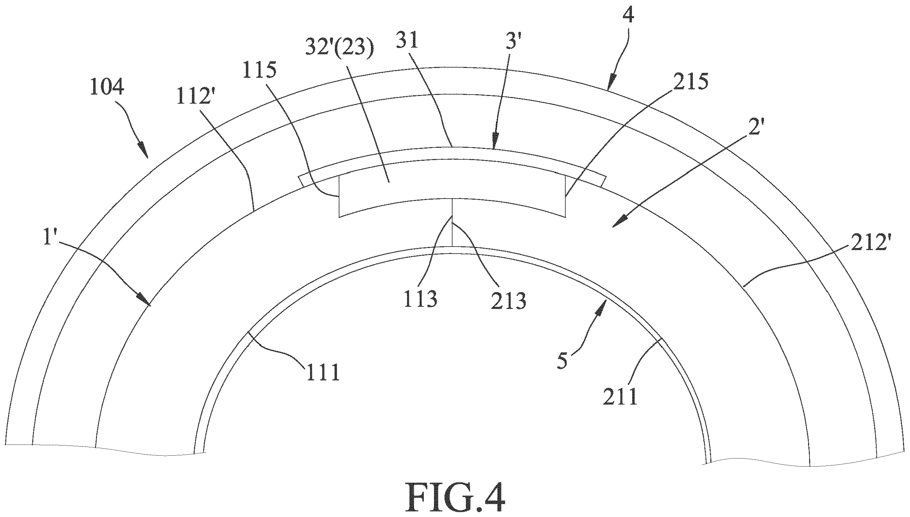

Referring to FIG. 4, a method for thermoforming a bicycle frame component 104 according to a fourth embodiment of this disclosure includes steps 1 to 4.

In step 1, a first casing 1' and a second casing 2' both made of a thermoplastic material are prepared. The first casing 1' has a first inner surface 111, a first outer surface 112' opposite to the first inner surface 111, a first abutment surface 113 interconnecting the first inner surface 111 and the first outer surface 112', and a first groove 115 formed in a junction of the first outer surface 112' and the first abutment surface 113. The second casing 2' has a second inner surface 211, a second outer surface 212' opposite to the second inner surface 211, a second abutment surface 213 interconnecting the second inner surface 211 and the second outer surface 212', and a second groove 215 formed in a junction of the second outer surface 212' and the second abutment surface 213.

In step 2, a reinforcing unit 3' is prepared. The reinforcing unit 3' includes a thermoplastic reinforcing member 32' and a thermosetting reinforcing member 31.

In step 3, the first abutment surface 113 and the second abutment surface 213 are brought to abut against each other such that the first groove 115 and the second groove 215 cooperate with each other to form a receiving groove 23, after which the thermoplastic reinforcing member 32 is disposed in the receiving groove 23, and the thermosetting reinforcing member 31 is placed on a junction of the first outer surface 112' and the second outer surface 212' to cover the receiving groove 23 and thermoplastic reinforcing member 32.

In step 4, a thermoforming mold 4 is placed on one side of the junction of the first and second casings 1, 2 having the thermosetting reinforcing member 31 (that is, the junction of the first outer surface 112' and the second outer surface 212'), and an air bag 5 is placed on the other side of the junction of the first and second casings 1, 2 opposite to the thermoforming mold 4. Then, the air bag 5 is inflated such that the air bag 5 expands and abuts against the first inner surface 111 and the second inner surface 211. The thermoforming mold 4 abuts against the thermosetting reinforcing member 31, the first outer surface 112' and the second outer surface 212', and cooperates with the air bag 5 to thermally bond the thermoplastic reinforcing member 32 to the junction of the first outer surface 112' and the first abutment surface 113 and the junction of the second outer surface 212' and the second abutment surface 213 and to thermally bond the thermosetting reinforcing member 31 to the first outer surface 112' and the second outer surface 212', thereby joining the first casing 1' and the second casing 2' to form the bicycle frame component 104.

The advantage of this embodiment resides in that, through the cooperation of the first groove 115 and the second groove 215 to form the receiving groove 23 that receives the thermoplastic reinforcing member 32, a bonding surface area between the thermoplastic reinforcing member 32 and both the first casing 1' and the second casing 2' can be increased during thermoforming, thereby enhancing the bonding strength thereof. In addition, the thermosetting reinforcing member 31 can reduce residual stress among the thermoplastic reinforcing member 32, the first casing 1' and the second casing 2', resulting in further improved bonding strength at the junction of the first casing 1' and the second casing 2'.

It is worth mentioning that in other variations of this embodiment, in step 2, the reinforcing unit 3' may not include the thermosetting reinforcing member 31, and in step 4, the thermoplastic reinforcing member 32 disposed in the receiving groove 23 is thermally bonded to the first casing 1' and the second casing 2'. Such configuration can similarly achieve the effect of improved bonding strength at the junction of the first casing 1' and the second casing 2'.

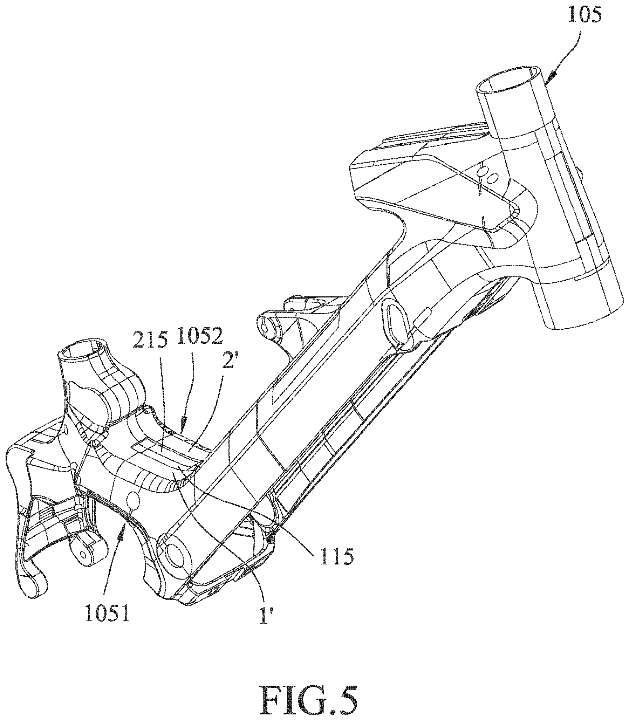

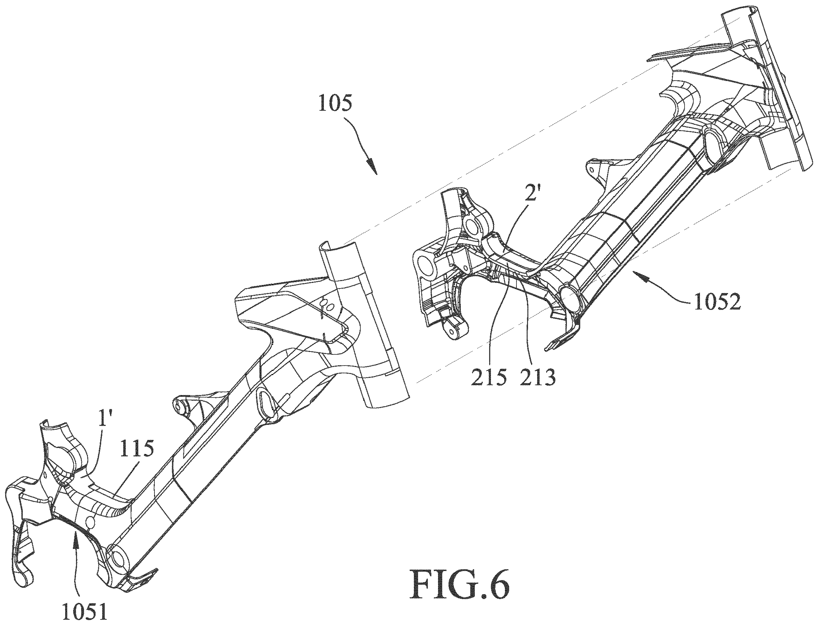

Referring to FIGS. 5 and 6, a bicycle frame structure 105 may incorporate at least one of the abovementioned bicycle frame components 101, 102, 103 and 104. The bicycle frame structure 105 may be different parts of a bicycle frame, for instance, a main body, a rear fork or a front fork, but are not limited thereto. For instance, in this embodiment, the bicycle frame structure 105 is a handle holder of a bicycle frame, and incorporates the bicycle frame component 104 of the fourth embodiment. The bicycle frame structure 105 includes a first frame half 1051 incorporating the first casing 1', and a second frame half 1052 incorporating the second casing 2'.

In the description above, for the purposes of explanation, numerous specific details have been set forth in order to provide a thorough understanding of the embodiments. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects, and that one or more features or specific details from one embodiment may be practiced together with one or more features or specific details from another embodiment, where appropriate, in the practice of the disclosure.

## Claims

1. A bicycle frame component (101, 102, 103, 104), **characterized by**:
a first casing (1, 1') having a first inner surface (111), a first outer surface (112, 112') opposite to said first inner surface (111), and a first abutment surface (113) interconnecting said first inner surface (111) and said first outer surface (112, 112');
a second casing (2, 2') having a second inner surface (211), a second outer surface (212, 212') opposite to said second inner surface (211), and a second abutment surface (213) interconnecting said second inner surface (211) and said second outer surface (212, 212'), said second abutment surface (213) and said first abutment surface (113)abutting against each other; and
a reinforcing unit (3, 3') disposed on and thermally bonded to a junction of said first casing (1, 1') and said second casing (2, 2').

2. The bicycle frame component (101) of claim 1, wherein said reinforcing unit (3) includes a thermosetting reinforcing member (31) disposed on and thermally bonded to a junction of said first outer surface (112) and said second outer surface (212), said thermosetting reinforcing member (31) being a thermosetting plastic which includes a fiber selected from the group consisting of cotton, hemp fiber, carbon fiber, silicon carbide fiber, glass fiber and combinations thereof.

3. The bicycle frame component (102) of claim 1, wherein said reinforcing unit (3) includes a thermoplastic reinforcing member (32) disposed on and thermally bonded to a junction of said first outer surface (112) and said second outer surface (212), said thermoplastic reinforcing member (32) being a continuous fiber reinforced thermoplastic that includes a fiber selected from the group consisting of carbon fiber, glass fiber and a combination thereof, and a thermoplastic selected from the group consisting of polycarbonate, polyethylene, polyethylene terephthalate, polyetheretherketone and combinations thereof.

4. The bicycle frame component (103) of claim 1, wherein said reinforcing unit (3) includes a thermosetting reinforcing member (31) disposed on and thermally bonded to a junction of said first outer surface (112) and said second outer surface (212), and a thermoplastic reinforcing member (32) disposed on and thermally bonded to a junction of said first inner surface (111) and said second inner surface (211), said thermosetting reinforcing member (31) being a thermosetting plastic which includes a fiber selected from the group consisting of cotton, hemp fiber, carbon fiber, silicon carbide fiber, glass fiber and combinations thereof, and said thermoplastic reinforcing member (32) being a continuous fiber reinforced thermoplastic that includes a fiber selected from the group consisting of carbon fiber, glass fiber and a combination thereof, and a thermoplastic selected from the group consisting of polycarbonate, polyethylene, polyethylene terephthalate, polyetheretherketone and combinations thereof.

5. The bicycle frame component (104) of claim 1, wherein:
said first casing (1') further has a first groove (115) formed in a junction of said first outer surface (112') and said first abutment surface (113);
said second casing (2') further has a second groove (215) formed in a junction of said second outer surface (212') and said second abutment surface (213) and cooperating with said first groove (115) to form a receiving groove (23); and
said reinforcing unit (3') includes a thermoplastic reinforcing member (32) disposed in said receiving groove (23) and thermally bonded to the junction of said first outer surface (112') and said first abutment surface (113) and the junction of said second outer surface (212') and said second abutment surface (213), and a thermosetting reinforcing member (31) thermally bonded to said first outer surface (112') and said second outer surface (212') to cover said thermoplastic reinforcing member (32).

6. The bicycle frame component (104) of claim 5, wherein said thermoplastic reinforcing member (32) is a continuous fiber reinforced thermoplastic that includes a fiber selected from the group consisting of carbon fiber, glass fiber and a combination thereof, and a thermoplastic selected from the group consisting of polycarbonate, polyethylene, polyethylene terephthalate, polyetheretherketone and a combination thereof.

7. A method for thermoforming the bicycle frame component (101, 102, 103, 104) as claimed in claim 1, **characterized by** the following steps:
A) preparing the first casing (1, 1') and the second casing (2, 2') both made of a thermoplastic material;
B) preparing the reinforcing unit (3, 3') which includes at least one of a thermosetting reinforcing member (31) and a thermoplastic reinforcing member (32);
C) abutting the first abutment surface (113) and the second abutment surface (213) against each other, and then placing the reinforcing unit (3, 3') at a junction of the first casing (1, 1') and the second casing (2, 2'); and
D) thermally bonding the reinforcing unit (3, 3') to the first casing (1, 1') and the second casing (2, 2') such that the first casing (1, 1') and the second casing (2, 2') are joined to form the bicycle frame component (101, 102, 103, 104).

8. The method of claim 7, wherein the reinforcing unit (3) includes the thermosetting reinforcing member (31) that is placed at the junction of the first casing (1, 1') and the second casing (2, 2') and that is a thermosetting plastic which includes a fiber selected from the group consisting of cotton, hemp fiber, carbon fiber, silicon carbide fiber, glass fiber and combinations thereof.

9. The method of claim 7, wherein the reinforcing unit (3) includes the thermoplastic reinforcing member (32) that is placed at the junction of the first casing (1, 1') and the second casing (2, 2') and that is a continuous fiber reinforced thermoplastic, the continuous fiber reinforced thermoplastic including a fiber selected from the group consisting of carbon fiber, glass fiber and a combination thereof, and a thermoplastic selected from the group consisting of polycarbonate, polyethylene, polyethylene terephthalate, polyetheretherketone and combinations thereof.

10. The method of claim 7, wherein:
in step B), the reinforcing unit (3) includes the thermosetting reinforcing member (31) and the thermoplastic reinforcing member (32);
in step C), the thermosetting reinforcing member (31) and the thermoplastic reinforcing member (32) are placed opposite to each other at the junction of the first casing (1) and the second casing (2); and
in step D), the thermoplastic reinforcing member (32) and the thermosetting reinforcing member (31) are thermally bonded to the junction of the first casing (1) and the second casing (2).

11. The method of claim 10, wherein:
the thermoplastic reinforcing member (32) is a continuous fiber reinforced thermoplastic which includes a fiber selected from the group consisting of carbon fiber, glass fiber and a combination thereof, and a thermoplastic selected from the group consisting of polycarbonate, polyethylene, polyethylene terephthalate, polyetheretherketone and combinations thereof; and
the thermosetting reinforcing member (31) is a thermosetting plastic which includes a fiber selected from the group consisting of cotton, hemp fiber, carbon fiber, silicon carbide fiber, glass fiber and combinations thereof.

12. The method of claim 7, wherein, in step A):
the first casing (1, 1') further has a first inner surface (111) and a first outer surface (112, 112') opposite to the first inner surface (111), the first abutment surface (113) interconnecting the first inner surface (111) and the first outer surface (112, 112'); and
the second casing (2') further has a second inner surface (211) and a second outer surface (212, 212') opposite to the second inner surface (211), the second abutment surface (213) interconnecting the second inner surface (211) and the second outer surface (212, 212').

13. The method of claim 12, wherein:
in step A), the first casing (1') further has a first groove (115) formed in a junction of the first outer surface (112') and the first abutment surface (113), and the second casing (2') further has a second groove (215) formed in a junction of the second outer surface (212') and the second abutment surface (213) and cooperating with the first groove (115) to form a receiving groove (23);
in step B), the reinforcing unit (3') includes the thermoplastic reinforcing member (32);
in step C), the thermoplastic reinforcing member (32) is disposed in the receiving groove (23); and in step D), the thermoplastic reinforcing member (32) is thermally bonded to the junction of the first outer surface (112') and the first abutment surface (113) and the junction of the second outer surface (212') and the second abutment surface (213).

14. The method of claim 13, wherein:
in step B), the reinforcing unit (3') further includes the thermosetting reinforcing member (31);
in step C), the thermosetting reinforcing member (31) is placed on a junction of the first outer surface (112') and the second outer surface (212') to cover the thermoplastic reinforcing member (32); and
in step D), the thermosetting reinforcing member (31) is thermally bonded to the first outer surface (112') and the second outer surface (212').

15. The method of claim 7, wherein:
in step C), the reinforcing unit (3, 3') covers one side of the junction of the first casing (1, 1') and the second casing (2, 2'); and
step D) includes the following sub-steps of:
D1) placing a thermoforming mold (4) on the one side of the junction of the first casing (1, 1') and the second casing (2, 2'), and an air bag (5) on the other side of the junction of the first casing (1, 1') and the second casing (2, 2') opposite to the thermoforming mold (4); and
D2) inflating the air bag (5) such that the air bag (5) expands and abuts against the first casing (1, 1') and the second casing (2, 2'), the thermoforming mold (4) cooperating with the air bag (5) to thermally bond the reinforcing unit (3, 3') to the first casing (1, 1') and the second casing (2, 2').
